# EUROPÄISCHE PATENTANMELDUNG

(11) **EP 1 650 051 A2**
(43) Veröffentlichungstag der Anmeldung: **26.04.2006**
(21) Anmeldenummer: 05022755.2
(22) Anmeldetag: 19.10.2005
(51) Int. Cl.: B44B 5/02

(54) **Verfahren zur Oberflächenbehandlung von Kunststoffplatten**

(30) Priorität: 21.10.2004 DE 102004051313
(71) Anmelder: Hueck Folien GmbH & Co. KG, 92712 Pirk (DE)
(72) Erfinder: Trassl, Stephan, Dr., 95478 Kemnath (DE); Reich, Peter, 92712 Pirk (DE)
(74) Vertreter: Landgraf, Elvira

(57) **Zusammenfassung**

Verfahren zur Oberflächenbehandlung von Kunststoffplatten zur Vervielfältigung von Motiven von optisch variablen Strukturen, wie Beugungsstrukturen, Beugungsgitter, Reflexionsmuster, Oberflächenreliefstrukturen, Hologramme, Kinegramme und dergleichen, dadurch gekennzeichnet, dass die Kunststoffplatte vor der Beschichtung mit einer leitfähigen Schicht einer Coronabehandlung unterzogen wird.

## Beschreibung

Die Erfindung betrifft ein Verfahren zur Oberflächenbehandlung von Kunststoffplatten, beispielsweise Polymethylmetacrylat- oder Polycarbonatplatten und dergleichen, die bei der Vervielfältigung von Motiven von optisch variablen Strukturen bzw. bei der Herstellung von entsprechenden Prägematrizen eingesetzt werden.
Unter optisch variablen Strukturen werden in Folgenden Beugungsstrukturen, Beugungsgitter, Reflexivnsmuster, Oberflächenreliefstrukturen, Hologramme, Kinegramme und dergleichen verstanden.

Für die Vervielfältigung von Motiven von optisch variablen Strukturen zur Massenproduktion werden meist kleine Einzelmotive mittels eines mechanischen Prägeverfahrens zu einem Gesamtmotiv repliziert.

Die Replikation erfolgt auf Kunststoffplatten, beispielsweise auf Polymethylmetacrylat- oder Polycarbonatplatten. Die optisch variable Struktur wird in diese Kunststoffplatten gepresst. Anschließend muss die Oberfläche der Kunststoffplatten mit einer leitfähigen Schicht versehen werden.

Dies geschieht in den meisten Fällen durch einen Sprühprozess, bei dem ein Zwei-Komponenten-System eingesetzt wird, oder durch Sputtern oder einen PVD oder CVD-Prozess.
Als leitfähige Schicht kommen dabei metallische Schichten, beispielsweise aus Silber, Gold, Palladium Kupfer, Platin oder Nickel in Frage.

Für die Erzielung dieser leitfähigen Schicht muss die Oberfläche der Kunststoffplatte entsprechend vorbereitet werden.

Dazu werden zu meist Netzmittel, Haftvermittler und/oder Bekeimungsreagenzien verwendet, die durch Sprühen oder Tauchen aufgebracht werden. Dabei muss die Art der Kunststoffplatte beachtet werden, da für jede Kunststoffplatte zu meist andere Chemikalien für diesen Vorbehandlungsprozess notwendig sein können.

Die leitfähige Schicht wird anschließend von der Kunststoffplatte abgezogen und für die Herstellung des Prägewerkzeugs für die Erzeugung von Oberflächenreliefstrukturen, Hologrammen und dergleichen verwendet.

Des Weiteren ist es schwierig, mit dieser Methode der Vorbehandlung die Oberflächenspannung der Kunststoffplatte definiert einzustellen, sodass die Haftung der leitfähigen Schicht reproduzierbar in einem definierten Bereich liegt.
Dabei muss einerseits die Haftung groß genug, damit eine präzise Abformung erfolgen kann, andererseits muss ein problemloses Abziehen der leitfähigen Schicht fehlerfrei von der Kunststoffplatte möglich sein.

Gegenstand der Erfindung ist daher ein Verfahren zur Oberflächenbehandlung von Kunststoffplatten zur Vervielfältigung von Motiven von optisch variablen Strukturen, wie Beugungsstrukturen, Beugungsgitter, Reflexionsmuster, Obertlächenreliefstrukturen, Hologramme, Kinegramme und dergleichen, dadurch gekennzeichnet, dass die Kunststoffplatte vor der Beschichtung mit einer leitfähigen Schicht einer Coronabehandlung unterzogen wird.

Durch den Einsatz einer Corona Entladung, das ist eine Gasentladung in einem stark inhomogenen elektrischen Feld, werden Netzmittel und/oder Haftvermittler überflüssig.

Die Oberflächenspannung kann unabhängig von der Art der Kunststoffplatten definiert und reproduzierbar eingestellt werden.

Somit wird eine für jeden Plattentyp optimale Haftung für die nachfolgenden Prozesse (Aufbringen einer leitfähigen Schicht) ermöglicht. Zusätzlich wird eine Reinigung der Plattenoberfläche erzielt.

Dabei können auch fehlerhafte Platten, die unter der Oberfläche mit freiem Auge nicht sichtbare Fehlstellen aufweisen, erkannt werden und sofort aus dem Verfahren genommen werden. Fehlerhafte Platten zeigen nach der Behandlung deutliche Fehlstellen, Risse und dergleichen.

Mit dieser Behandlung der Oberfläche wird die Adhäsion zwischen den zu verbindenden Schichten verbessert oder ein besseres Haften der Streichmasse oder Farbe erzielt.

Das Ergebnis der Behandlung hängt von verschiedenen Parametern ab, wie der Leistung der Elektroden, der Dauer der Entladung, der Art des behandelten Materials, der Temperatur und Feuchtigkeit, eventuellen Verunreinigungen, der Obertlächenmorphologie und ähnlichem.

Üblicherweise werden eine Leistung von 100 bis 900 Watt und ein Abstand zwischen Elektrode und zu behandelnden Material von 3 1 bis 15 mm bevorzugt. Es können aber auch höhere Leistungen und höhere Abstände gewählt werden.

Die Geschwindigkeit wird üblicherweise in Abhängigkeit von der Leistung und den Eigenschaften des zu behandelnden Materials etwa 0,5 bis 5 m/min betragen.

Durch den Einsatz der erfindungsgemäßen Vorbehandlung wird eine reproduzierbare definierte Haftung der leitfähigen Schicht auf den Kunststoffplatten erzielt und somit Produktionsfehler vermieden.

Anschließend wird in üblicher Weise die leitfähige Schicht aufgebracht.

Als leitfähige Schicht kommen dabei metallische Schichten, beispielsweise aus Silber, Gold, Palladium Kupfer, Platin oder Nickel in Frage. Vorzugsweise wird eine leitfähige Schicht aus Silber eingesetzt.

Nach Herstellung der leitfähigen Schicht wird diese von der Kunststoffplatte abgezogen und zu einer Prägeform zur Herstellung von optisch variablen Strukturen verwendet.

## Patentansprüche

1. Verfahren zur Oberflächenbehandlung von Kunststoffplatten zur Vervielfältigung von Motiven von optisch variablen Strukturen. wie Beugungsstrukturen, Beugungsgitter, Reflexionsmuster, Oberflächenreliefstrukturen, Hologramme, Kinegramme und dergleichen, **dadurch gekennzeichnet, dass** die Kunststoffplatte vor der Beschichtung mit einer leitfähigen Schicht einer Coronabehandlung unterzogen wird.

2. Verfahren nach Anspruch 1, **dadurch gekennzeichnet, dass** als Kunststoffplatten Polymetacrylat- oder Polycarbonatplatten eingeseizt werden.

3. Verfahren nach einem der Ansprüche 1 oder 2, **dadurch gekennzeichnet, dass** als leitfähige Schicht metallische Schichten, beispielsweise aus Silber, Gold, Palladium Kupfer, Platin oder Nickel verwendet werden.

4. Verfahren nach Anspruch 3, **dadurch gekennzeichnet, dass** als leitfähige Schicht eine Silberschicht eingesetzt wird.

5. Verfahren nach einem der Ansprüche 1 bis 4, **dadurch gekennzeichnet. dass** die Coronabehandlung mit einer Leistung von 100 - 900 Watt durchgeführt wird.

6. Verfahren nach einem der Ansprüche 1 bis 5, **dadurch gekennzeichnet, dass** zwischen Elektrode und zu behandelnder Kunststoffplatte ein Abstand von 3 bis 15 mm eingehalten wird.
